# EUROPÄISCHE PATENTSCHRIFT

(11) **EP 2 337 718 B1**
(45) Veröffentlichungstag und Bekanntmachung des Hinweises auf die Patenterteilung: **17.10.2012**
(21) Anmeldenummer: 09740071.7
(22) Anmeldetag: 22.10.2009
(51) Int. Cl.: B60T 17/04

(54) **PNEUMATISCHES BELÜFTUNGSVENTIL**
PNEUMATIC VENTILATION VALVE
VALVE DE VENTILATION PNEUMATIQUE

(30) Priorität: 25.10.2008 DE 102008053257
(43) Veröffentlichungstag der Anmeldung: 29.06.2011
(73) Patentinhaber: Bayerische Motoren Werke Aktiengesellschaft, 80809 München (DE); Aft Inhaber Dirk Kramer E.K., 33142 Büren (DE)
(72) Erfinder: TEMMESFELD, Axel, 83257 Gstadt (DE); CICHOREK, Hermann, 37434 Gieboldehausen (DE); KRAMER, Dirk, 37176 Nörten-Hardenberg (DE)
(74) Vertreter: Schmidt, Günter H. H.
(86) Internationale Anmeldenummer: PCT/EP2009/007552
(87) Internationale Veröffentlichungsnummer: WO 2010/046103

(56) Entgegenhaltungen:
- EP-A- 0 148 480
- DE-C1- 19 739 161
- DE-C2- 3 817 581
- US-A- 4 070 001

## Beschreibung

Die Erfindung betrifft ein pneumatisches Belüftungsventil für eine von einer Unterdruckquelle zu einer Unterdruckkammer insbesondere eines pneumatischen Fahrzeug-Bremskraftverstärkers führenden Verbindungsleitung, mit einem einen Strömungs-Eintrittsstutzen und einen Strömungs-Austrittsstutzen aufweisenden Ventilgehäuse, in dem eine durch ein Federelement belastete Membran einen zwischen dem Strömungs-Eintrittsstutzen und dem Strömungs-Austrittsstutzen liegenden Strömungsraum bei Vorliegen eines betragsmäßig höheren Unterdrucks in diesem von einer mit der Umgebung verbundenen Kammer des Ventilgehäuses trennt, während bei betragsmäßig geringerem Unterdruck im Strömungsraum die Membran aufgrund ihrer dann durch das Federelement verursachten Verlagerung einen Verbindungsweg zwischen der Umgebung und dem Strömungsraum freigibt. Zum technischen Umfeld wird lediglich beispielshalber auf die DE 38 17 581 C2 und daneben auf die nicht vorveröffentlichte Patentanmeldung der Bayerische Motoren Werke AG vom 17.10.2008 mit dem Titel "Betriebsverfahren für einen Unterdruckbremskraftverstärker eines Fahrzeugs sowie Unterdruckbremskraftverstärker" verwiesen.

In der letztgenannten nicht vorveröffentlichten Patentanmeldung ist der technologische Hintergrund für ein erfindungsgemäßes pneumatisches Belüftungsventil beschrieben, wenngleich ein solches auch für andere, unter den technologischen Randbedingungen vergleichbare Einsatzfälle verwendet werden kann. Mit einem Belüftungsventil nach dem Oberbegriff des Anspruchs 1 soll also eine Verbindungsleitung in Abhängigkeit von der Höhe des in dieser Verbindungsleitung herrschenden Unterdrucks selbsttätig belüftet werden können, wobei dieses Belüftungsventil sicher und zuverlässig arbeiten soll.

Eine Maßnahme aufzuzeigen, mit Hilfe derer ein pneumatisches Belüftungsventil nach dem Oberbegriff des Anspruchs 1 sicher und zuverlässig arbeiten kann, ist folglich Aufgabe der vorliegenden Erfindung.

Die Lösung dieser Aufgabe ist dadurch gekennzeichnet, dass im besagten im Belüftungsventil gebildeten Verbindungsweg zwischen der Umgebung und dem Strömungsraum eine Drossel vorgesehen ist, welche den über den freigegebenen Verbindungsweg in den Strömungsraum gelangenden Umgebungsluftstrom auf eine solche Höhe begrenzt, dass auch bei einem Funktionsausfall der Membran die Unterdruckquelle in der Lage ist, einen ausreichenden Unterdruck in der Unterdruckkammer zu erzeugen. Vorteilhafte Aus- und Weiterbildungen sind Inhalt der Unteransprüche.

Es wurde erkannt, dass ein Funktionsausfall der Membran, insbesondere in Form eines Risses in derselben, üblicherweise dazu führen wird, dass diese Membran unter Einwirkung des genannten Federelements stets den Verbindungsweg zwischen der Umgebung und dem besagten Strömungsraum innerhalb des Ventilgehäuses freigibt. Da letzterer sodann stets mit der Umgebung verbunden ist, kann eine Unterdruckquelle, die über den Strömungs-Austrittsstutzen des Ventilgehäuses an den genannten Strömungsraum angeschlossen ist, in diesem und folglich auch in einer über den Strömungs-Eintrittsstutzen an den Strömungsraum des Belüftungsventils angeschlossenen Unterdruckkammer möglicherweise keinen ausreichend hohen Unterdruck mehr erzeugen. Eine die genannte Unterdruckkammer enthaltende Funktionseinheit, so beispielsweise ein pneumatischer Unterdruckbremskraftverstärker eines Kraftfahrzeugs, könnte dann nicht funktionsfähig sein, was aber unbedingt zu vermeiden ist. Daher wird eine Maßnahme vorgeschlagen, mit Hilfe der sichergestellt ist, dass auch bei stets freigegebenem Verbindungsweg zwischen der Umgebung und dem Strömungsraum des Belüftungsventils die Unterdruckquelle einen ausreichend hohen Unterdruck im Strömungsraum erzeugen kann. Diese Maßnahme besteht in einer hinsichtlich ihres freien Strömungsquerschnitts geeignet dimensionierten Drossel im genannten Verbindungsweg.

Für den genannten Anwendungsfall eines erfindungsgemäßen Belüftungsventils in der Verbindungsleitung zwischen einem Unterdruckbremskraftverstärker eines Personenkraftwagens (als Fahrzeug) und einer wie üblich dimensionierten Unterdruckpumpe (als sog. Unterdruckquelle hierfür) hat es sich als günstig herausgestellt, wenn der freie Querschnitt der Drossel im Bereich zwischen 0,03 mm² und 1,8 mm² und insbesondere zwischen 0,13 mm² und 0,5 mm² liegt. Dabei ist die Auslegung der Membran und des diese in die den sog. Verbindungsweg im Belüftungsventil freigebende Position drängenden Federelements vorzugsweise so getroffen, dass die Membran den Strömungsraum bei Vorliegen eines Unterdrucks in der betragsmäßigen Größenordnung zwischen 400 mbar und 950 mbar, insbesondere bei einem Betrag in der Größenordnung zwischen 600 mbar und 800 mbar, von der Umgebung trennt.

Vorteilhaft ist es, wenn der Membrane in ihren beiden Endanschlag-Positionen jeweils ein ringförmiger Dichtsitz im Ventilgehäuse zugeordnet ist und der besagte Verbindungsweg die Membran innerhalb dieser Dichtsitze und somit in der von den beiden ringförmigen Dichtsitzen umschlossenen Fläche der Membran in Form einer Durchtrittsöffnung durchdringt. Hiermit ist nämlich gewährleistet, dass dann, wenn die Membran in einem Bereich außerhalb der ringförmigen Dichtsitze, in dem der wesentliche Anteil einer in Verbindung mit einer Verlagerung der Membran erfolgenden Verformung derselben erfolgt, einen Riss erhält, nicht durch diesen Riss hindurch, sondern ausschließlich durch die für die Belüftung der Verbindungsleitung in der Membran vorgesehene Durchtrittsöffnung hindurch ein Luftstrom von der Umgebung in den Strömungsraum des Belüftungsventils gelangen kann. Somit bleibt ein kontrollierter Strömungsverlauf des Luftstromes von der Umgebung in den Strömungsraum auch im Fehlerfall erhalten und es kann somit einfach sichergestellt werden, dass dieser besagte Luftstrom dann auch die erfindungsgemäß vorgesehene Drossel durchdringen muss.

Es kann die Drossel in der Membran selbst gebildet sein oder in einem mit der Membran verbundenen Drosselelement vorgesehen sein, wobei dann die Drossel eine Verlagerung bzw. Hubbewegung der Membrane mit ausführt. Alternativ kann die Drossel im Ventilgehäuse eines erfindungsgemäßen Belüftungsventils integriert bzw. an diesem vorgesehen sein, so dass die Drossel eine Verlagerung der Membrane nicht mit ausführen muss. Im erstgenannten Fall kann wie bereits erwähnt eine in der Membrane vorgesehene Durchtrittsöffnung bzw. ein entsprechender Durchflussquerschnitt gleichzeitig die Drossel bzw. einen entsprechenden Drosselquerschnitt bilden, oder es kann die Drossel durch ein eigenständiges Element gebildet sein, weiches mit der Membran verbunden ist, bspw. in Form einer mit einer Drosselbohrung versehenen Platte, die in auf der Membran vorgesehene Taschen eingesteckt ist. Im zweitgenannten Fall, nämlich bei Integration (im weitesten Sinne) der Drossel in das Ventilgehäuse des Belüftungsventils kann die Drosselstelle entweder durch ein Element des Ventilgehäuses, bspw. einen Deckel desselben gebildet sein, indem in diesem eine geeignete Bohrung eingebracht ist, oder es kann die Drosselstelle durch ein eigenständiges Element gebildet sein, welches an geeigneter Stelle, nämlich mit einer Durchtrittsbohrung oder dgl. im Ventilgehäuse zusammenwirkend, an diesem angeordnet ist.

Die Membran eines erfindungsgemäßen Belüftungsventils kann aus einem Elastomerwerkstoff oder einer Metallfolie bestehen, wobei eine metallische Membran vorzugsweise als ein Stanzteil hergestellt wird und mit zumindest einer kreisförmig umlaufenden Wellen zur Erzeugung des benötigten Hubes der Membran versehen ist. Vorteilhaft ist es weiterhin, wenn im sog. Verbindungsweg des Belüftungsventils ein Filter oder allgemein ein geeigneter Abscheider für Partikel und/oder Ölstaub oder dgl. vorgesehen ist, mit welchem bspw. Staub oder Ölspritzer vom Eintritt in den Strömungsraum abgehalten werden. Dieses Filter kann ein Schaumfilter sein oder ein Sieb, welches eingelegt oder eingeschweißt ist.

Ein vorteilhafte Reduzierung eigenständiger Bauelemente und somit eine Reduktion des insgesamt benötigten Bäuraumes ist erzielbar, wenn innerhalb des Ventilgehäuses eines erfindungsgemäßen Belüftungsventils vorzugsweise im Bereich des Strömungs-Eintrittsstutzens ein nur bei Vorliegen einer betragsmäßig positiven Unterdruckdifferenz zwischen dem Strömungsraum und dem Strömungs-Eintrittsstutzen öffnendes Rückschlagventil vorgesehen ist. Beim bevorzugten Anwendungsfall für einen Fahrzeug-Unterdruckbremskraftverstärker ist ein solches Rückschlagventil üblicherweise im Übergangsbereich zwischen der im Oberbegriff des Anspruchs 1 genannten Verbindungsleitung und der Unterdruckkammer des Bremskraftverstärkers vorgesehen. Dieses bislang eigenständige Bauelement kann nun in ein erfindungsgemäßes Belüftungsventil integriert sein, wobei dessen Ventilgehäuse vorteilhafterweise mitgenutzt werden kann, so dass sich gesamthaft ein verringerter Aufwand ergibt. Da hiermit auch die Anzahl der Schnittstellen im Gesamtsystem reduziert wird, ergibt sich gleichzeitig eine höhere System-Sicherheit, was insbesondere an einem Fahrzeug-Bremssystem ein nicht zu unterschätzender Vorteil ist.

Im weiteren wird die Erfindung anhand dreier Ausführungsbeispiele weiter erläutert, wobei die beigefügten **Figuren 1a, 1b** eine erste Ausführungsform in gestreckter Ausführung (sog. "Inline-Variante") mit freigegebenem sog. Verbindungsweg (Fig.1a) sowie mit abgesperrten Verbindungsweg (Fig.1b) im Schnitt zeigen. Eine zweite und dritte Ausführungsform eines erfindungsgemäßen Belüftungsventils in abgewinkelter sog. 90°-Variante ist jeweils im Schnitt in den **Figuren 2, 3** dargestellt. In sämtlichen Figuren sind gleiche Elemente mit den gleichen Bezugsziffern gekennzeichnet und erfindungswesentlich können sämtliche näher beschriebenen Merkmale sein.

Mit der Bezugsziffer 1 ist das Ventilgehäuse eines erfindungsgemäßen pneumatischen Belüftungsventils in seiner Gesamtheit gekennzeichnet. Dieses besteht aus einem Hauptgehäuse-Teil 1a, an welches ein Strömungs-Eintrittsstutzen 1b sowie ein Strömungs-Austrittsstutzen 1 c angeformt oder angebunden ist, und welches von einem Deckelteil 1d verschlossen ist. Somit ist innerhalb des Ventilgehäuses 1 ein sog. Strömungsraum 2 gebildet und weiterhin eine Kammer 3, die vom Strömungsraum 2 durch eine Membran 4 getrennt ist. Der Strömungsraum 2 liegt dabei zwischen dem Strömungs-Eintrittsstutzen 1b und dem Strömungs-Austrittsstutzen 1c und ist mit diesen stets fluidisch verbunden, wobei das Belüftungsventil in seiner Gesamtheit über den Strömungs-Eintrittsstutzen 1 b und den Strömungs-Austrittsstutzen 1 c in eine nicht dargestellte Verbindungsleitung zwischen einer Unterdruckkammer bspw. eines (ebenfalls nicht dargestellten) Fahrzeug-Bremskraftverstärkers und einer in Form einer Vakuumpumpe ausgebildeten zugehörigen Unterdruckquelle eingebaut ist. Letztere ist an den Strömungs-Austrittsstutzen 1 c angeschlossen, während die Unterdruckkammer an den Strömungs-Eintrittsstutzen 1 b angeschlossen ist.

Die genannte Kammer 3, welche vom Strömungsraum 2 des Belüftungsventils durch eine Membran 4 getrennt ist, steht über zumindest eine im Ventilgehäuse 1 bzw. im Deckelteil 1d desselben vorgesehene Durchtrittsbohrung 5 mit der Umgebung in Verbindung, d.h. über diese Durchtrittsbohrung 5 kann Umgebungsluft in die Kammer 3 gelangen. Dabei ist mit der Bezugsziffer 12 ein in das Deckelteil 1d eingesetztes Filter gekennzeichnet, welches sicherstellt, dass lediglich gereinigte Umgebungsluft (ohne Staubpartikel oder dergleichen) in die Kammer 3 gelangen kann.

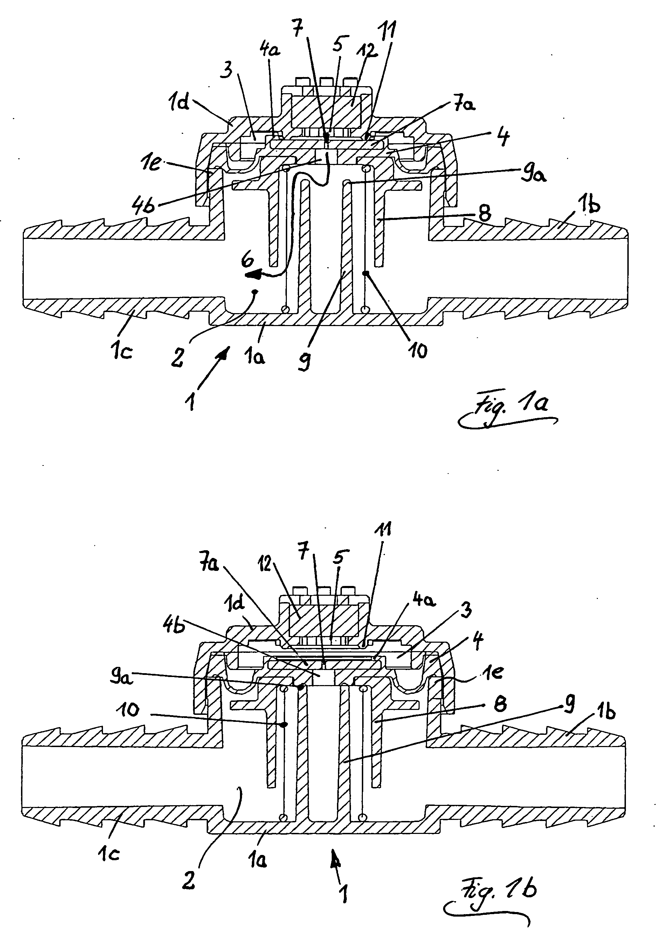

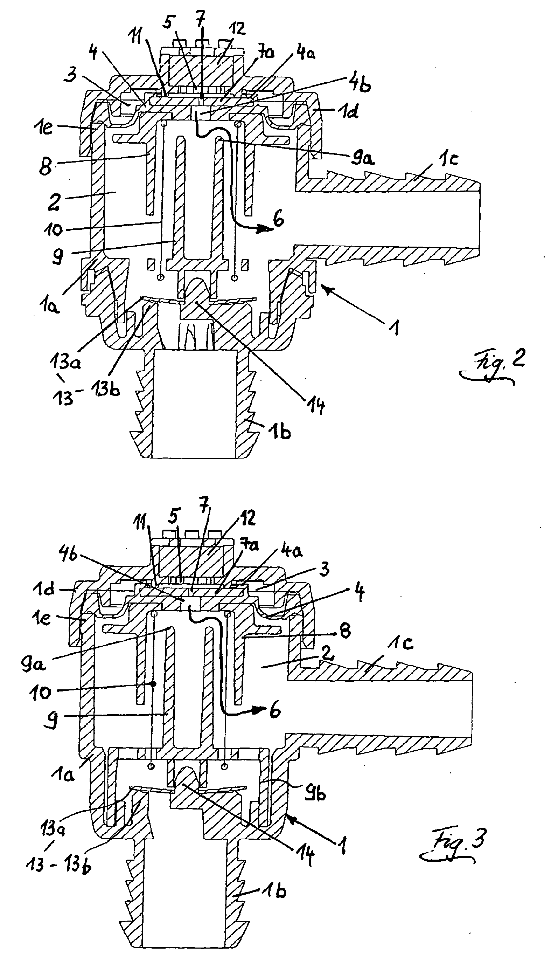

Wie in mit Membranen ausgestatten Ventilen durchaus üblich ist auch hier die genannte Membran 4 partiell verlagerbar und kann zwei verschiedene Endanschlag-Positionen einnehmen, wobei in den **Figuren 1 a, 2 und 3** die Membran 4 in einer ersten möglichen Endanschlag-Position dargestellt ist, in welcher die Kammer 3 fluidisch, d.h. strömungstechnisch mit dem Strömungsraum 2 des Belüftungsventils verbunden ist, so dass über einen sog. Verbindungsweg, der durch einen langen Weg-Pfeil 6 verdeutlicht ist und für welchen im weiteren die Bezugsziffer 6 verwendet wird, Luft aus der Umgebung über die Kammer 3 in den Strömungsraum 2 gelangen kann. In **Figur 1b** hingegen ist die Membran 4 des ersten Ausführungsbeispiels (nach Fig.1a) in ihrer anderen Endanschlag-Position dargestellt, in welcher der genannte Verbindungsweg 6 durch die Membran 4 abgesperrt ist; so dass keine Umgebungsluft aus der Kammer 3 in den Strömungsraum 2 gelangen kann. Selbstverständlich ist eine entsprechende Endanschlag-Position der Membran auch für die Ausführungsformen nach den Figuren 2, 3 möglich.

Bei sämtlichen Ausführungsbeispielen ist die in Draufsicht kreisförmige Membran 4 mit ihrem Rand zwischen einem im Querschnitt kreisförmigen Flansch 1 e des Hauptgehäuse-Teils 1a und dem Deckelteil 1 d eingespannt. Ebenfalls bei sämtlichen Ausführungsbeispielen trägt die Membran auf ihrer der Kammer 3 zugewandten Oberfläche über sog. aus der Membran 4 herausgearbeitete Taschen 4a ein später noch näher erläutertes Drosselelement 7a, in welchem eine als später noch näher erläuterte Drossel 7 fungierende Drosselbohrung (für diese wird ebenfalls die Bezugsziffer 7 verwendet) vorgesehen ist. An diese Drosselbohrung 7 schließt sich eine in der Membran 4 vorgesehene Durchtrittsöffnung 4b an.

Bei sämtlichen Ausführungsbeispielen ist an der der Kammer 3 abgewandten und folglich dem Strömungsraum 2 zugewandten Oberfläche der Membran 4 eine sog. äußere Federführung 8 von im wesentlichen kreiszylindrischer Gestalt vorgesehen. Innerhalb dieser äußeren Federführung 8 ist ein lediglich symbolisch durch zwei Linien dargestelltes Federelement 10 in Form einer Schraubendruckfeder angeordnet, deren Längsachse im wesentlichen mit der Zylinderachse der äußeren Federführung 8 zusammenfällt. Konzentrisch innerhalb dieser Schraubendruckfeder 10 bzw. dieses Federelements 10 ist eine sog. innere Federführung 9 vorgesehen, die entweder Bestandteil des Hauptgehäuse-Teils 1a ist (vgl. Fig.1a, 1b) oder an diesem im wesentlichen direkt (vgl. Fig.3) oder indirekt (vgl. Fig.2) abgestützt ist. Dabei bildet das in den Figuren obere und der Membran 4 zugewandte freie Ende dieser inneren Federführung 9 einen ringförmigen, hier speziell kreisförmig umlaufenden Dichtsitz 9a für die Membran 4, welcher mit einem figürlich nicht dargestellten kreisförmigen Dichtring versehen ist bzw. versehen sein kann. Von diesem Dichtsitz 9a eingeschlossen bzw. in der von diesem kreisförmigen Dichtsitz 9a begrenzten Fläche der Membran 4 vorgesehen ist im Falle der in Fig.1b dargestellten Endanschlag-Position der Membran 4 die bereits genannte in der Membran 4 vorgesehene Durchtrittsöffnung 4b.

Ebenfalls bei sämtlichen Ausführungsbeispielen ist ein (weiterer) kreisförmiger Dichtring 11 an der der Membran 4 zugewandten Seite des Deckelteils 1d vorgesehen und bildet somit einen weiteren ringförmigen Dichtsitz, für welchen ebenfalls die Bezugsziffer 11 verwendet wird. Dieser Dichtsitz 11 für die Membran 4 bzw. für das auf diese aufgebrachte Drosselelement 7a umgibt die zumindest eine Durchtrittsbohrung 5 (bzw. ggf. mehrere solche) im Deckelteil 1d ringförmig bzw. schließt die Durchtrittsbohrung 5 innerhalb der Kammer 3 in sich ein. Weiterhin ist bei sämtlichen Ausführungsbeispielen das Federelement 10 bzw. die Schraubendruckfeder 10 einerseits, d.h. mit ihrem ersten Ende, über die äußere Federführung 8 an der Membran 4 abgestützt und andererseits mit ihrem anderen Ende direkt (vgl. Fig.1a, 1b) oder indirekt (vgl. Fig.2, 3) letztlich am Ventilgehäuse 1 innerhalb desselben.

Auf diese Weise drängt das letztlich zwischen der Membran 4 und dem Ventilgehäuse 1 innerhalb desselben eingespannte Federelement 10 die Membran 4 ohne Einwirkung weiterer Kräfte in die in den Figuren 1a, 2, 3 dargestellte Position, in welcher die Membran 4 vom Dichtsitz 9a beabstandet ist und unter Zwischenschaltung des mit der Membran 4 verbundenen Drosselelements 7a sozusagen indirekt auf dem Dichtsitz 11 aufliegt. In dieser Position der Membran 4 kann somit Umgebungsluft auf dem freigegebenen Verbindungsweg 6 in den Strömungsraum 2 gelangen. Wenn jedoch im Strömungsraum 2 ein betragsmäßig relativ hoher Unterdruck herrscht, so greifen an der Membran 4 weitere Kräfte an, welche die Membran 4 gegen die Kraft des Federelements 10 in Richtung zum Dichtsitz 9a bewegen, bis die Membran 4 gemäß der Darstellung in Fig.1b auf diesem Dichtsitz 9a aufliegt. Da sich die Durchtrittsöffnung 4b in der Membran 4 innerhalb dieses kreisförmigen Dichtsitzes 9a befindet, ist in diesem Falle der Verbindungsweg 6 abgesperrt, so dass keine Umgebungsluft aus der Kammer 3 in den Strömungsraum 2 gelangen kann.

Beim Ausführungsbeispiel nach den **Figuren 1a, 1b** ist die innere Federführung 9 direkt an der der Membran 4 gegenüberliegenden und den Strömungsraum 2 begrenzenden Wand des Hauptgehäuse-Teils 1a des Ventilgehäuses 1 abgestützt bzw. aus dieser herausgeformt, nachdem dieses Ventilgehäuse 1 bzw. dessen Einzelteile vorzugsweise als Kunststoff-Spritzgussteil gestaltet und hergestellt ist.

Bei den Ausführungsbeispielen nach den **Figuren 2, 3** ist im Ventilgehäuse 1 im Mündungs-Bereich des Strömungs-Eintrittsstutzens 1 b ein nur bei Vorliegen einer betragsmäßig positiven Unterdruckdifferenz zwischen dem Strömungsraum 2 und dem Strömungs-Eintrittsstutzen 1b öffnendes Rückschlagventil 13 vorgesehen, das aus einer eine gewisse Flexibilität aufweisenden Ventilplatte 13a in Form einer aus einem Elastomermaterial hergestellten Dichtscheibe und einem mit dieser zusammenwirkenden sog. Rückschlagventildeckel 13b besteht, der aus dem dem Strömungsraum 2 zugewandten Ende des Strömungs-Eintrittsstutzens 1b herausgearbeitet ist. Dabei ist die Ventilplatte 13a auf einen sich in Radialrichtung quasi in das Zentrum des Strömungs-Eintrittsstutzens 1b erstreckenden und am Rückschlagventildeckel 13b abgestützten Arm 14 aufgesteckt, auf den beim Ausführungsbeispiel nach Figur 2 anschließend an die Ventilplatte 13a ein die innere Federführung 9 bildendes Element, für welches ebenfalls die Bezugsziffer 9 verwendet wird, aufgesteckt ist. Bei diesem Ausführungsbeispiel nach **Figur 2** ist der Strömungs-Eintrittstutzen 1 b durch ein eigenständig gefertigtes Bauteil gebildet, welches anschließend mit dem Hauptgehäuse-Teil 1a des Ventilgehäuses 1 verschweißt wird. Beim Ausführungsbeispiel nach **Figur 3** hingegen ist der Strömungs-Eintrittsstutzen 1 b (ebenso wie der Strömungs-Austrittsstutzen 1 c) an das Hauptgehäuse-Teil 1 a angeformt, und es ist ein die innere Federführung 9 bildendes Element, für welches ebenfalls die Bezugsziffer 9 verwendet wird, mit einem kreiszylindrischen Fußabschnitt 9b versehen, mit welchem dieses bei entferntem Deckelteil 1 b in den Innenraum des Hauptgehäuse-Teiles 1a so eingesetzt werden kann, dass sich das innere Federführungs-Element 9 am Hauptgehäuse-Teil 1a abstützt. Praktisch analog dem Ausführungsbeispiel nach Fig.2 ist dabei das Rückschlagventil 13 gestaltet. Im übrigen ist bei den beiden Ausführungsformen nach den Figuren 2, 3 das Federelement 10 mit seiner der Membran 4 abgewandten Seite wie symbolisch dargestellt am hierfür geeignet gestalteten inneren Federführungs-Element 9 abgestützt.

Nochmals auf die Drossel 7 im sog. Verbindungsweg 6 zurückkommend, die vorliegend bei sämtlichen Ausführungsbeispielen durch eine Drosselstelle oder Drosselbohrung 7 in einem mit der Membran 4 verbundenen Drosselelement 7a gebildet ist, die aber gemäß der Beschreibungseinleitung vor der Figurenbeschreibung auch andersartig ausgebildet sein kann:

Zunächst sei die Membran 4 voll funktionsfähig und nicht defekt, d.h. sie weise keinen Riss oder dergleichen auf, so dass sich die Membran 4 ohne Vorliegen eines signifikanten Unterdrucks im Strömungsraum 2 (und somit bei nicht wirksamer Unterdruckquelle) in der den Verbindungsweg 6 freigebenden und in den Figuren 1a, 2, 3 dargestellten Position befindet. Dann kann über diesen die Drossel 7 enthaltenden Verbindungsweg 6 eine ausreichende Menge von Umgebungsluft in den Strömungsraum 2 gelangen, so dass in einer im Oberbegriff des Anspruchs 1 genannten Verbindungsleitung zwischen einer Unterdruckkammer und der in diesem Falle nicht aktiven Unterdruckquelle, in welche dieser Strömungsraum 2 über den Strömungs-Eintrittsstutzen 1b und den Strömungs-Austrittsstutzen 1 c eingebunden ist, eventuell noch vorhandener geringfügiger Rest-Unterdruck abgebaut werden kann.

Ist hingegen der Unterdruck in der besagten Verbindungsleitung und somit auch im Strömungsraum 2 des Belüftungsventils aufgrund aktiver bzw. wirksamer Unterdruckquelle ausreichend hoch, so nimmt wie gewünscht die Membran 4 die in Fig.1b dargestellte Position ein und es wird wie gewünscht der Verbindungsweg 6 im Belüftungsventil aufgrund des dann wirksamen und abgeschlossenen Dichtsitzes 9a abgesperrt. Falls sich jedoch in dieser Position der Membran 4 ein Riss insbesondere im Bereich des in den Figuren sichtbaren Membran-Wulstes, welcher außerhalb der beiden erläuterten ringförmigen Dichtsitze 9a, 11 liegt, bildet, so gelangt über diesen Riss kurzzeitig soviel Umgebungsluft aus der Kammer 3 in den Strömungsraum 2, dass der darin herrschende Unterdruck kurzzeitig abgebaut wird, woraufhin das Federelement 10 die Membran 4 in die in den Figuren 1a, 2, 3 dargestellte und den besagten Verbindungsweg 6 freigebende Position bewegt. In dieser Position kann aber aufgrund des dann wirksamen und geschlossenen Dichtsitzes 11 lediglich durch die Drossel 7 hindurch Umgebungsluft aus der mit der Umgebung in Verbindung stehenden Kammer 3 in den Strömungsraum 2 gelangen. Die Drossel 7 ist aber erfindungsgemäß solchermaßen ausgelegt bzw. dimensioniert, dass auch dann - also bei einem Funktionsausfall der Membran 4 - eine aktive bzw. wirksame an den Strömungs-Austrittsstutzen 1 c angeschlossene Unterdruckquelle in der Lage ist, einen ausreichenden Unterdruck in einer an den Strömungs-Eintrittsstutzen 1 b angeschlossen Unterdruckkammer zu erzeugen, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Pneumatisches Belüftungsventil für eine von einer Unterdruckquelle zu einer Unterdruckkammer insbesondere eines pneumatischen Fahrzeug-Bremskraftverstärkers führenden Verbindungsleitung, mit einem einen Strömungs-Eintrittsstutzen (1b) und einen Strömungs-Austrittsstutzen (1c) aufweisenden Ventilgehäuse (1), in dem eine durch ein Federelement (10) belastete Membran (4) einen zwischen dem Strömungs-Eintrittsstutzen (1b) und dem Strömungs-Austrittsstutzen (1c) liegenden Strömungsraum (2) bei Vorliegen eines betragsmäßig höheren Unterdrucks in diesem von einer mit der Umgebung verbundenen Kammer (3) des Ventilgehäuses trennt, während bei betragsmäßig geringerem Unterdruck im Strömungsraum (2) die Membran (4) aufgrund ihrer dann durch das Federelement (10) verursachten Verlagerung einen Verbindungsweg (6) zwischen der Umgebung und dem Strömungsraum (2) freigibt,
**dadurch gekennzeichnet, dass** im besagten im Belüftungsventil gebildeten Verbindungsweg (6) zwischen der Umgebung und dem Strömungsraum (2) eine Drossel (7) vorgesehen ist, welche den über den freigegebenen Verbindungsweg (6) in den Strömungsraum (2) gelangenden Umgebungsluftstrom auf eine solche Höhe begrenzt, dass auch bei einem Funktionsausfall der Membran (4) die Unterdruckquelle in der Lage ist, einen ausreichenden Unterdruck in der Unterdruckkammer zu erzeugen.

2. Pneumatisches Belüftungsventil nach Anspruch 1,
**dadurch gekennzeichnet, dass** der Membran (4) in ihren beiden Endanschlag-Positionen jeweils ein ringförmiger Dichtsitz (9a, 11) im Ventilgehäuse zugeordnet ist und der besagte Verbindungsweg (6) die Membran (4) in der von den beiden ringförmigen Dichtsitzen (9a, 11) umschlossenen Fläche der Membran (4) in Form einer Durchtrittsöffnung (4b) durchdringt.

3. Pneumatisches Belüftungsventil nach Anspruch 1 oder 2,
**dadurch gekennzeichnet, dass** die Drossel (7) in der Membran (4) selbst gebildet oder in einem mit der Membran (4) verbundenen Drosselelement (7a) vorgesehen ist.

4. Pneumatisches Belüftungsventil nach Anspruch 1 oder 2,
**dadurch gekennzeichnet, dass** die Drossel (7) im oder am Ventilgehäuse (1) des Belüftungsventils vorgesehen ist.

5. Pneumatisches Belüftungsventil nach einem der vorangegangenen Ansprüche, **dadurch gekennzeichnet, dass** der freie Querschnitt der Drossel (7) im Bereich zwischen 0,03 mm² und 1,8 mm², insbesondere zwischen 0,13 mm² und 0,5 mm² liegt.

6. Pneumatisches Belüftungsventil nach einem der vorangegangenen Ansprüche, **dadurch gekennzeichnet, dass** die Auslegung so getroffen ist, dass die Membran (4) den Strömungsraum (2) bei Vorliegen eines Unterdrucks im Betrag zwischen 400 mbar und 950 mbar, insbesondere im Betrag zwischen 600 mbar und 800 mbar von der Umgebung trennt.

7. Pneumatisches Belüftungsventil nach einem der vorangegangenen Ansprüche, **dadurch gekennzeichnet, dass** die Membran (4) aus einem Elastomerwerkstoff oder einer Metallfolie besteht.

8. Pneumatisches Belüftungsventil nach einem der vorangegangenen Ansprüche, **dadurch gekennzeichnet, dass** die metallische Membran (4) ein Stanzteil mit zumindest einer kreisförmig umlaufenden Welle ist.

9. Pneumatisches Belüftungsventil nach einem der vorangegangenen Ansprüche, **dadurch gekennzeichnet, dass** im Verbindungsweg (6) ein Filter (12) oder Abscheider vorgesehen ist.

10. Pneumatisches Belüftungsventil nach einem der vorangegangenen Ansprüche, **dadurch gekennzeichnet, dass** innerhalb des Ventilgehäuses (1) im Bereich des Strömungs-Eintrittsstutzens (1b) ein nur bei Vorliegen einer betragsmäßig positiven Unterdruckdifferenz zwischen dem Strömungsraum (2) und dem Strömungs-Eintrittsstutzen (1b) öffnendes Rückschlagventil (13) vorgesehen ist.

## Claims

1. A pneumatic ventilation valve for a connection line leading from a negative pressure source to a negative pressure chamber, more especially of a pneumatic vehicle brake booster, comprising a valve housing (1), which has a flow inlet connector (1b) and a flow outlet connector (1c), in which a diaphragm (4) loaded by a spring element (10) divides a flow space (2) located between the flow inlet connector (1 b) and the flow outlet connector (1 c) when there is a higher negative pressure in terms of quantity therein from a chamber (3) of the valve housing connected to the surroundings, while, when there is less negative pressure in terms of quantity in the flow chamber (2), the diaphragm (4), because of its displacement caused by the spring element (10), frees a connection path (6) between the surroundings and the flow chamber (2), **characterised in that** provided in the said connection path (6) formed in the ventilation valve between the surroundings and the flow chamber (2) is a throttle (7), which limits the surrounding air flow arriving via the freed connection path (6) in the flow chamber (2) to a level such that even if there is a functional failure of the diaphragm (4), the negative pressure source is in a position to generate adequate negative pressure in the negative pressure chamber.

2. A pneumatic ventilation valve according to claim 1, **characterised in that** an annular sealing seat (9a, 11) in the valve housing is in each case associated with the diaphragm (4) in both its end stop positions and the said connection path (6) passes through the diaphragm (4) in the face of the diaphragm (4), which is surrounded by the two annular sealing seats (9a, 11), in the form of a through-opening (4b).

3. A pneumatic ventilation valve according to claim 1 or 2, **characterised in that** the throttle (7) is formed in the diaphragm (4) itself or in a throttle element (7a) connected to the diaphragm (4).

4. A pneumatic ventilation valve according to claim 1 or 2, **characterised in that** the throttle (7) is provided in or on the valve housing (1) of the ventilation valve.

5. A pneumatic ventilation valve according to any one of the preceding claims, **characterised in that** the free cross section of the throttle (7) is in the range between 0.03 mm² and 1.8 mm², more especially between 0,13 mm² and 0.5 mm².

6. A pneumatic ventilation valve according to any one of the preceding claims, **characterised in that** the design is such that the diaphragm (4) separates the flow chamber (2) from the surroundings when a negative pressure is present in a quantity between 400 mbar and 950 mbar, more especially in a quantity between 600 mbar and 800 mbar.

7. A pneumatic ventilation valves according to any one of the preceding claims, **characterised in that** the diaphragm (4) comprises an elastomer material or a metal foil.

8. A pneumatic ventilation valve according to any one of the preceding claims, **characterised in that** the metallic diaphragm (4) is a stamped part with at least one circular peripheral shaft.

9. A pneumatic ventilation valve according to any one of the preceding claims, **characterised in that** a filter (12) or separator is provided in the connection path (6).

10. A pneumatic ventilation valve according to any one of the preceding claims, **characterised in that** a check valve (13) opening only when a positive negative pressure difference in terms of quantity is provided between the flow chamber (2) and the flow inlet connector (1b) is present within the valve housing (1) in the region of the flow inlet connector (1b).

## Revendications

1. Valve de ventilation pneumatique pour une source de dépression d'une chambre à dépression, notamment pour une conduite aboutissant à un servofrein à dépression de véhicule comportant :
- un corps de valve (1) comportant un ajutage d'entrée (1b) et un ajutage de sortie (1c) et dans lequel une membrane (4) sollicitée par un élément de ressort (10) sépare une chambre d'écoulement (2) située entre l'ajutage d'entrée d'écoulement (1b) et l'ajutage de sortie d'écoulement (1c) en cas de dépression dont l'amplitude est élevée par rapport à une chambre (3) du boîtier de valve reliée à l'environnement alors que pour une dépression d'amplitude plus faible dans la chambre d'écoulement (2), le déplacement de la membrane (4) par l'élément de ressort (10), libère le chemin (6) entre l'environnement et la chambre d'écoulement (2),
valve **caractérisée par**
- un organe d'étranglement (7) dans le chemin de liaison (6) réalisé dans la valve de ventilation entre l'environnement et la chambre d'écoulement (2), cet organe d'écoulement limitant la veine d'air de l'environnement arrivant dans la chambre d'écoulement (2) par le chemin de liaison (6), ainsi libéré, à un niveau qui même en cas de défaillance de fonctionnement de la membrane (4), permet à la source de dépression de générer une dépression suffisante dans la chambre à dépression.

2. Valve de ventilation pneumatique selon la revendication 1, **caractérisée en ce que**
dans ses positions de butée en fin de course, la membrane (4) est associée respectivement à un siège d'étanchéité (9a, 11) annulaire dans le boîtier de valve et le chemin de liaison (6) traverse la membrane (4) sous la forme d'un orifice de passage (4b) dans la surface de la membrane (4) entourée par les deux sièges d'étanchéité (9a, 11) annulaires.

3. Valve de ventilation pneumatique selon la revendication 1 ou 2,
**caractérisée en ce que**
l'organe d'étranglement (7) de la membrane (4) est constitué directement par celle-ci ou par un organe d'étranglement (7a) relié à la membrane (4).

4. Valve de ventilation pneumatique selon la revendication 1 ou 2,
**caractérisée en ce que**
l'organe d'étranglement (7) est prévu dans ou sur le boîtier (1) de la valve de ventilation.

5. Valve de ventilation pneumatique selon l'une des revendications précédentes,
**caractérisée en ce que**
la section libre de l'organe d'étranglement (7) se situe dans une plage comprise entre 0,03 mm² et 1,8 mm², notamment entre 0,13 mm² et 0,5 mm².

6. Valve de ventilation pneumatique selon l'une des revendications précédentes,
**caractérisée en ce que**
par sa conception la membrane (4) sépare la chambre d'écoulement (2) par rapport à l'environnement en cas de dépression d'amplitude comprise entre 400 mbar et 950 mbar, notamment pour une amplitude comprise entre 600 mbar et 800 mbar.

7. Valve de ventilation pneumatique selon l'une des revendications précédentes,
**caractérisée en ce que**
la membrane (4) est réalisée en un élastomère ou sous la forme d'un film métallique.

8. Valve de ventilation pneumatique selon l'une des revendications précédentes,
**caractérisée en ce que**
la membrane métallique (4) est une pièce emboutie ayant au moins une ondulation périphérique de forme circulaire.

9. Valve de ventilation pneumatique selon l'une des revendications précédentes,
**caractérisée par**
un filtre (12) ou un séparateur dans le chemin de liaison (6).

10. Valve de ventilation pneumatique selon l'une des revendications précédentes,
**caractérisée en ce que**
la région de l'ajutage d'entrée d'écoulement (1b) dans le boîtier de valve (1), comporte un clapet anti-retour (13) qui ne s'ouvre qu'en cas de dépression d'amplitude positive entre la chambre d'écoulement (2) et l'ajutage d'entrée d'écoulement (1b).
